# EUROPEAN PATENT SPECIFICATION

(11) **EP 2 210 428 B1**
(45) Date of publication and mention of the grant of the patent: **11.04.2012**
(21) Application number: 07817028.9
(22) Date of filing: 29.09.2007
(51) Int. Cl.: H04W 4/00, H04W 48/16, H04W 48/12, H04W 84/04

(54) **METHOD FOR DETECTING CELL IDENTITY COLLISIONS**
VERFAHREN ZUR ERKENNUNG VON ZELLIDENTITÄTSKOLLISIONEN
PROCÉDÉ DE DÉTECTION DE COLLISIONS D'IDENTITÉ DE CELLULES

(43) Date of publication of application: 28.07.2010
(73) Proprietor: Huawei Technologies Co., Ltd., Longgang District, Shenzhen Guangdong 518129 (CN)
(72) Inventor: OLOFSSON, Henrik, Stockholm, 16494 (SE)
(74) Representative: Körber, Martin Hans
(86) International application number: PCT/CN2007/070837
(87) International publication number: WO 2009/043216

(56) References cited:
- CN-A- 1 423 437
- CN-A- 1 434 595
- CN-A- 1 984 459
- US-A1- 2010 008 235
- US-A1- 2010 178 912
- ERICSSON: "MCI conflict detection and resolution", 3GPP DRAFT; S5-071569 E MCI CONFLICT DETECTION AND RESOLUTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. Roma; 20070822, 22 August 2007 (2007-08-22), XP050306211, [retrieved on 2007-08-22]
- ERICSSON: "Automatic neighbour cell configuration", 3GPP DRAFT; R3-071494 AUTOMATIC NEIGHBOUR CELL CONFIGURATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Athens, Greece; 20070815, 15 August 2007 (2007-08-15), XP050162315, [retrieved on 2007-08-15]
- HUAWEI: "Detection of conflicting cell identities", 3GPP DRAFT; R3-071947 DETECTION OF CONFLICTING CELL IDENTITIES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Sophia Antipolis, France; 20071003, 3 October 2007 (2007-10-03), XP050162733, [retrieved on 2007-10-03]

## Description

### Field of the Invention

The present invention relates to a method of detecting cell identity collision in a cellular communication system. The present invention further relates to a communication system, a user entity and a network entity.

### Background of the Invention

Wireless mobile communication systems are usually cellular, i.e., the total coverage area of such systems is divided into smaller areas, cells, wherein each of these cells is associated with a radio base station having one or more antennas for providing communication resources via a radio interface for communication with user entities (UEs) in the radio coverage area of the radio base station.

In such systems, the base station often transmits an identity to enable the UE to identify the cell, so that the UE can report to the system which neighbour cell or cells it has detected.

The cells can be located adjacent to each other to jointly provide coverage in the geographical area that the communication system is intended to cover, and also, as in more complex systems, be arranged in different cell layers, wherein cells in different layers can be at least partially overlapping, and also be of different cell size.

In the 3rd Generation Partnership Program (3GPP) work on defining the cellular communication system presently called the Evolved Universal Terrestrial Radio Access (E-UTRA), or Long Term Evolution (LTE), it is suggested that each cell should be identified with one local identity (LI) (a.k.a. physical layer cell identity (PCI)), which is not unique within the system, i.e., the identity can be reused for more than one cell, and one global cell identity (GCI) which is unique in the system.

The use of both kinds of identities for a cell has the advantage that the LI can be made shorter, and thereby requires a smaller number of bits in a transmission than a global identity, for example when a UE is signalling the identity of a cell that has been detected by the UE. The GCI requires more bits in a transmission, but the use of the LI has the advantage that the GCI can be broadcasted more seldom, and also be used more seldom in reports from the UE.

As was mentioned, the UE is using the LI when reporting detected cells, but the system can also be using the LI when broadcasting which cells that should be barred (black listed and thereby not to be used by the UE) and if some cell specific parameters, for example a signal strength offset, should be applied to the measurements performed by the UE. Consequently, it is important that the LI uniquely identifies only one cell within the area where the UE is looking for neighbours.

There are situations when a base station of a serving cell must be able to translate a LI that a UE detects from a neighbour (or other) cell into a corresponding unique identity (GCI). For example, the base station needs to translate the LI into the corresponding GCI when initiating a communication with the base station of this neighbour cell, e.g., in order to initiate a handover process.

In 3GPP RAN 2 document R2-072674 (Ericsson) it is suggested that the translation is accomplished by letting each cell broadcast both LI and GCI (more seldom), and the base station requesting the UE to decode and report the GCI for a LI reported by the UE. This allows the base station to build up a representation, such as a list, of detected LI and its corresponding GCI for all neighbouring cells.

The usage of LI can be carefully planned so that no ambiguities arise with respect to which GCI a particular LI belongs. There are, however, situations where such planning is not always possible, for example in scenarios where a system operator is no longer in direct control of the location of the base station, e.g., personal home base stations, which are sold to an end-user with the purpose of creating one or more small cells in the home of the end-user.

In general, the same situation will occur if the operator chooses to not apply a strict planning process, but instead would like the system itself to be able to handle and adapt to situations where ambiguities regarding the GCI to which a particular LI belongs arise. In such situations, ambiguities regarding cell identities may arise, i.e., there may be two or more cells in the vicinity of each other having the same LI.

Therefore, there exists a need for a way of handling situations when ambiguities in cell identities arise.

In the 3GPP document S5-071569 it is suggested that each base station should request the UE to report the GCI, also if the base station already has a mapping from this LI to a GCI. The reason for this is to detect potential collisions of the above kind, where cells located close to each other are using the same LI (but different GCI). This solution detects any cases where neighbours to one cell use the same LI.

This solution, however, has the drawback that it requires the base station to repeatedly request the UE to report the GCI to make sure that there is no collision. This reporting will consume valuable radio resources for the system, as well as battery power in the UE.

Consequently, there exists a need for an improved method for detecting and reporting cell identities in a cellular communication system.

### Summary of the Invention

It is an object of the present invention to provide a method of detecting cell identity collision in a cellular communication system that solves or at least mitigates the above mentioned problems. This object is achieved by a method according to the characterizing portion of claim 1.

It is a further object of the present invention to provide a communication system that solves or at least mitigates the above mentioned problems. This object is achieved by a communication system according to the characterizing portion of claim 8.

According to the present invention, it is provided a method of detecting cell identity collision in a cellular communication system. A coverage area of said communication system is made up of a plurality of cells. At least one radio transmitter provides communication with at least one user entity in the coverage area of a said cell. The cell corresponds to one local identity, which is reusable within the communication system, and one corresponding global identity, which is unique in the system. The method is characterized in the step of, when two different cells using the same local identity are detected by the user entity, communicating the detection of two different cells using the same local identity to a network entity, wherein the detection is transmitted when a criterion is fulfilled; the detection is carried out by reading the global identity of a newly detected cell having the same local identity as a known cell and determining that the global identities of the known cell and the newly detected cell are different.

This has the advantage that ambiguities in the identity of detected cells can be handled with considerably less signalling, thereby reducing radio resource usage. In the prior art, the radio transmitter that is providing radio coverage in a cell, e.g., a radio base station, periodically requests user entities to transmit the corresponding global identity of the local identity of a detected cell in order to ensure that the radio transmitter at all times has an accurate global identity for a local identity in order to detect collisions. According to the invention, however, the radio transmitter can rely on its information regarding the corresponding global identity of a local identity, since a user entity that detects the presence of two or more radio transmitters (cells) having the same local identity will notify the radio transmitter regarding this detection, immediately or after a period of time, and for as long as no further cell having a same local identity as a previously detected cell has been identified, the radio transmitter need not request the excessive transmissions of global identities as in the prior art.

Consequently, the drawback of the prior art that the base station repeatedly has to request the UE to report the global identity to make sure that there is no collision is overcome or at least substantially reduced.

The invention also relates to a user entity according to claim 10 and a network entity according to claim 13.

Further characteristics of the present invention, and advantages thereof, will be evident from the following detailed description of preferred embodiments and appended drawings, which are given by way of example only, and are not to be construed as limiting in any way.

### Brief Description of the Drawings

Fig. 1 discloses an example of an E-UTRA system in which the present invention may advantageously be utilised.
Fig. 2 discloses an exemplary method according to the invention.

### Detailed Description of the Invention

Although applicable in various kinds of cellular communication systems, the present invention will be described with reference to the 3rd Generation Partnership Program (3GPP) cellular communication system, which presently is called the Evolved Universal Terrestrial Radio Access (E-UTRA) or Long Term Evolution (LTE).

In the present description and claims, the term network entity is to be interpreted as a radio access node, such as a radio base station, or a backbone network node. Also smaller home base stations are to be included in the term network entity. Mobile user entities such as mobile phones, smart phones or handheld computers having communication capabilities, are not included in the term network entity as used in this description and the following claims.

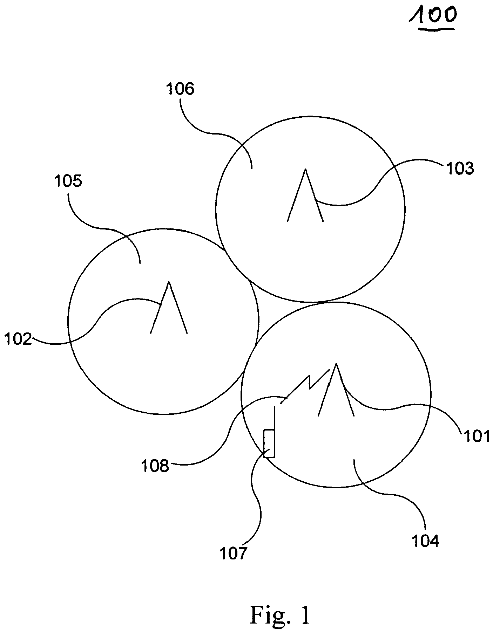

An example of a simplified architecture of an E-UTRA system 100 is shown in fig. 1, and discloses radio base stations 101-103 (stationary radio transceivers for duplex communication or, as the case may be, radio transmitters for downlink only mode communication. In the figure, the base stations are provided with radio transceivers). In E-UTRA the base stations are called eNBs (enhanced Node B) 101-103. A user entity (UE) 107 connects to the network by means of a radio interface, Uu interface, 108. The eNB 101-103 handles communication over the radio interface in a certain coverage area, i.e., cell 104-106, which is the area wherein the radio signal is strong enough to allow a satisfactory communication with UEs within the said area.

When the UE 107 moves around in the coverage area provided by the communication system, the UE 107 will move from one cell to another, and thereby an ongoing communication will be transferred (handed over) from the eNB to which the UE presently belongs, i.e., the source cell, cell 104 in fig. 1, to the cell into which the UE is entering, i.e., the target cell, e.g., cell 105 in fig. 1. This is accomplished by establishing a communication channel on the Uu interface of the target cell, and terminating the communication channel on the Uu interface of the source cell.

However, in order to perform such a handover, and also for other purposes, it must be possible to identify the cells, i.e., distinguish the cells from each other. As was mentioned in the background description above, this can be accomplished by the base stations 104-106 transmitting identities by means of which the base stations can be identified. The transmitted identities can be transmitted explicitly, or as signals from which the identities can be derived. In this description and claims, signals from which the identities can be derived are to be considered as if the identities are explicitly transmitted.

As also mentioned above, the base stations can be provided with both a global cell identity GCI, which is unique within the system, and a local cell identity, LI, which can be reused for more than one base station within the system. Preferably, the cells are assigned local identities in a manner that ensures that two cells having the same LI are located at a sufficient distance from each other. However, since communication systems are becoming more and more complex, it is becoming more and more difficult to plan the usage of LI in a system in a manner so that no ambiguities arise with respect to which GCI a particular LI belongs. Also, there are situations where such planning is not always possible, for example with regard to personal home base stations as described above, and/or when the operator wants the system itself to be able to handle and adapt to situations where collisions in the use of LI arise. The base stations transmit their associated local identities and global identities so that the identities can be derived by a user entity from signals received from the said radio transmitters.

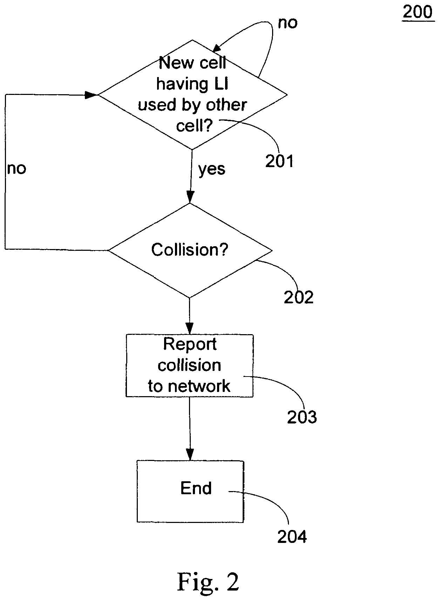

A method 200 according to a first exemplary embodiment of the present invention, which solves or at least mitigates the problem of such ambiguities, is disclosed in fig. 2. According to the invention, the UE is utilised to detect and report potential LI collisions. The UE collect the LI and GCI of detected cells, and if it is detected that different cells are using the same LI, the UE can report this to the serving cell, which may then forward it to a central network entity if needed.

The base stations in the system usually contain lists of local identities LI and their corresponding global identities GCI of surrounding base stations. A base station can, for example, create these lists from measurement data received from user entities when present in the coverage area of by the base station. Each time a new LI is reported to the base station that is not previously present in the list, the LI is added to the list, and the UE, either voluntarily or on request from the base station, transmits the GCI that corresponds to the LI.

According to the invention, the user entities consequently include lists of local identities LI and their corresponding global identities GCI instead of, or in addition to, the base stations. The base stations transmit their associated local identities and global identities so that the identities can be derived by a user entity from signals received from the said base stations, thereby enabling the user entity to build lists, or other kinds of representations, of LI and GCI.

For as long as the list in the UE only contains single representations of a local identity, the process remains in step 201. If however, the UE detects a LI already present in the list, and determines, by the corresponding GCI, that a new cell having the same LI as a cell already present in the list, the process continues to step 202. The measurements can be performed in both idle and/or active mode.

In step 202, the UE makes a determination whether the detected LI is to be classified as a collision. It is important to have a criterion for when two cells having the same LI should be considered a collision. For example, the system can indicate to the UE a criterion for when to report potential collisions. Different criteria that can be used are exemplified of, but not limited to, the following.

It can be determined to be a collision if the UE detects two cells using the same LI when:
- the UE is being served by the same base station,
- the UE has been present in a predetermined maximum number of cells between the detections of cells having the same local identity,
- the time between the two (or more) detections is lower than a certain value,
- the UE has moved less than a predetermined distance,
- the two different cells are detected simultaneously or substantially simultaneously.

The criteria can, for example, be pre-defined (in the specifications) or signalled to the UE in a dedicated or broadcasted manner.

Also, in one embodiment, the criteria are transmitted to selected active mode UEs to thereby enable this measurement and reporting for only these UEs. Another possibility is to broadcast the criteria on a common channel and thereby enable the measurement and reporting for all or only idle mode UEs.

If the detection of two cells using the same LI is not considered to constitute a collision according to the above, the process returns to step 201. If, on the other hand, the detection is determined to be a collision, the process continues to step 203, where the UE report the collision to the system. This can be done immediately, especially if the UE is in active mode. It may also be possible wait and report this together with other signalling, for example together with tracking area updates or when the UE transits from idle to active mode.

The collision report can be sent to the base station or any other suitable network entity. If the collision report is transmitted to another network entity, e.g., a central network entity that is responsible for handling and resolving local cell identity collisions in the system, the data can be transmitted transparent to the serving cell base station, e.g. as user plane data in a user plane data transmission.

The message from the UE preferably includes the two GCI that was detected and possibly the LI used by both detected cells. In addition to this, the UE may also include measurements related to the defined criteria, for example what the distance was between the detection of the two GCI using the same LI, or the time between the detections. The UE may also add information about the serving cell, such as LI and/or GCI.

When the UE has transmitted the collision report, the process is ended in step 204. Consequently, the present invention provides a solution that in a simple manner is capable of detecting cell identity collisions without unnecessary loading of radio resources, since the UE will be able to read the GCI from detected cells with a minimal, or no, additional overhead.

The reported collision can then be handled in any suitable way, e.g., by the serving base station or another network entity. For example, the base station/network entity can decide to, based on the collision report alone or in connection with other collision reports, modify the local cell identity for at least one of the cell having a same local network parameter. In this decision, also other criteria can be taken into consideration, such as distance between the cells, number of intermediate cells between the two cells having the same local identity, and/or known geographical obstacles, such as tall buildings, mountains and the like.

During a cell search procedure, the UE can distinguish between cells with different time synchronisation. The UE can also detect the LI of this cell. A UE searching for neighbouring cells, and detecting two cells using the same LI at the same time, has to decide if this is two cells, and not just a delayed copy of the same cell caused by multi path propagation.

If the UE assumes it is only one cell, he will not detect that a conflict has occurred. If the UE assumes that it is two cells, it would cost additional UE processing (battery) to decode broadcast channels to check if it in fact is two cells. Therefore, it is advantageous if the network could control how the UE behaves in such a scenario.

Consequently, the UE should consider a detection of two such signals to be a potential collision and investigate this further if two LI is detected with a relative time difference larger that a certain value. This threshold time could be set in different ways, e.g.:
- be pre-defined in standardisation,
- be implicitly transmitted from the system, for example based on the guard interval,
- be explicitly transmitted from the system in a dedicated or broadcasted manner,
- be based on UE measurements of typical time dispersion.

Also, a combination of two or more of the above criteria can be used. For example, the time can be set based on an explicit value multiplied with the implicitly transmitted guard time.

When the UE has detected a collision in this way, the UE collision shall be reported to the system. This could be done immediately, especially if the UE is in active mode. It may also be possible wait and report this together with other signalling as described above.

The measurement could be sent to the base station for forwarding to a network entity responsible for resolving collision situations. Alternatively, the report can be transmitted as data transparent to the base station, as described above.

Also in this case, the message from the UE should include the detected LI and possibly the two GCI if the UE is able decode these. The UE may also include the detected time difference. The UE may also add information about the serving cell, such as LI or GCI.

In addition to detecting collisions in local cell identities, the invention can also be used for detecting collisions of other cell specific network parameters, which are important to be unique. Examples of such network parameters include, but are not limited to, RACH signatures and UL reference signals.

Further, although the present invention has been described in connection with an E-UTRAN system, the principles of the invention applies to cellular access systems in general, and are therefore applicable in any cellular system, as long as a local network parameter and a global network parameter is used by the cells.

## Claims

1. Method of detecting cell identity collision in a cellular communication system, wherein a coverage area of said communication system is made up of a plurality of cells (104-106), in each of said cells at least one radio transmitter (101-103) provides communication with at least one user entity (107), each of said cells corresponds to one local identity, which is reusable within the communication system, and one corresponding global identity, which is unique in the system, where cells corresponding to a same local identity are distinguishable by different global identities, **characterized in that** the method comprises, when two different cells using the same local identity are detected by the user entité (step 201).
communicating the detection of the two different cells using the same local identity to a network entity (step 203), wherein the detection is transmitted when a criterion is fulfilled (step 202) ; the detection is carried out by reading the global identity of a newly detected cell having the same local identity as a known cell and determining that the global identities of the known cell and the newly detected cell are different.

2. Method according to claim 1, wherein the method comprises the user entity further communicating the local and/or the global identity of at least one of the two different cells.

3. Method according to claim 1 or 2, wherein the method comprises, in said user entity:
storing a representation of detected local identities and corresponding global identities.

4. Method according to claim 3, wherein the method comprises, in said user entity:
detecting a new cell corresponding to the same local identity as a cell already present in the representation.

5. Method according to claim 1, wherein said criterion is signalled to the user entity.

6. Method according to claim 1 or 5, wherein said criterion is one or more from the group of criteria:
- two or more cells corresponding to the same local identity are detected while the user entity is being served by the same radio transmitter,
- the user entity has been present in a predetermined maximum number of cells between the detections of cells corresponding to the same local identity,
- when the time between two of the detections is lower than a certain value,
- when the user entity has moved less than a predetermined distance,
- when the two different cells are detected simultaneously or substantially simultaneously, and/or
- the distance between the different cells is less than a threshold value.

7. Method according to one of the claims 1 to 6, wherein the method comprises:
reporting said detection to the network entity immediately, when a set period of time after the detection has lapsed, and/or together with signalling of other data.

8. Cellular communication system of detecting cell identity collision, wherein a coverage area of said communication system is made up of a plurality of cells (104-106), in each of said cells at least one radio transmitter (101-103) provides communication with at least one user entity (107), each of said cells corresponds to one local identity, which is reusable within the communication system, and one corresponding global identity, which is unique in the system, where cells corresponding to a same local identity are arranged to be distinguishable by different global identities, **characterized in that** the communication system comprises means for, when two different cells using the same local identity are detected by the user entity:
- receiving the detection of the two different cells using the same local identity from the user entity, wherein the detection is transmitted from the user entity when a criterion is fulfilled; the detection is carried out by reading the global identity of a newly detected cell having the same local identity as a known cell and determining that the global identities of the known cell and the newly detected cell are different.

9. Cellular communication system according to claim 8, wherein the system comprises means for signalling the criterion to said user entity.

10. User entity of detecting cell identity collision in a cellular communication system, wherein a coverage area of said communication system is made up of a plurality of cells (104-106), in each of said cells at least one radio transmitter (101-103) provides communication with at least one user entity (107), each of said cells corresponds to one local identity, which is reusable within the communication system, and one corresponding global identity, which is unique in the system, where cells corresponding to a same local identity are arranged to be distinguishable by different global identities, **characterized in that** the user entity comprises means for:
- detecting that two different cells using the same local identity, and
- communicating the detection of two different cells using the same local identity to a network entity, wherein the detection is transmitted when a criterion is fulfilled; the detection is carried out by reading the global identity of a newly detected cell having the same local identity as a known cell and determining that the global identities of the known cell and the newly detected cell are different.

11. User entity according to claim 10, wherein the user entity comprises means for communicating the local and/or the global identity of at least one of the two different cells.

12. User entity according to claim 10 or 11, wherein the user entity comprises means for:
- storing a representation of detected local identities and corresponding global identities.

13. Network entity of detecting cell identity collision in a cellular communication system, wherein a coverage area of said communication system is made up of a plurality of cells (104-106), in each of said cells at least one radio transmitter (101-103) provides communication with at least one user entity (107), each of said cells corresponds to one local identity, which is reusable within the communication system, and one corresponding global identity, which is unique in the system, where cells corresponding to a same local identity are distinguishable by different global identities, **characterized in that** the network entity comprises means for, when two different cells using the same local identity are detected by the user entity:
receiving the detection of the two different cells using the same local identity from the user entity, wherein the detection is transmitted when a criterion is fulfilled; the detection is carried out by reading the global identity of a newly detected cell having the same local identity as a known cell and determining that the global identities of the known cell and the newly detected cell are different.

## Patentansprüche

1. Verfahren zum Erfassen einer Zellenidentitätskollision in einem Zellenkommunikationssystem, wobei ein Versorgungsbereich des Kommunikationssystems aus mehreren Zellen (104-106) besteht, wobei in jeder der Zellen wenigstens ein Funksender (101-103) eine Kommunikation mit wenigstens einer Nutzerentität (107) bereitstellt, wobei jede der Zellen einer lokalen Identität, die innerhalb des Kommunikationssystems wiederverwendbar ist, und einer entsprechenden globalen Identität, die in dem System eindeutig ist, entspricht, wobei Zellen, die einer selben lokalen Identität entsprechen, durch unterschiedliche globale Identitäten unterscheidbar sind, **dadurch gekennzeichnet, dass** das Verfahren, wenn durch die Nutzerentität zwei unterschiedliche Zellen erfasst werden, die dieselbe lokale Identität verwenden, Folgendes umfasst (Schritt 201):
Übermitteln der Erfassung der zwei unterschiedlichen Zellen, die dieselbe lokale Identität verwenden, an eine Netzentität (Schritt 203), wobei die Erfassung gesendet wird, wenn ein Kriterium erfüllt ist (Schritt 202); wobei die Erfassung durch Lesen der globalen Identität einer neu erfassten Zelle mit derselben lokalen Identität wie eine bekannte Zelle und durch Bestimmen, dass die globalen Identitäten der bekannten Zelle und der neu erfassten Zelle unterschiedlich sind, ausgeführt wird.

2. Verfahren nach Anspruch 1, wobei das Verfahren umfasst, dass die Nutzerentität ferner die lokale und/oder die globale Identität wenigstens einer der zwei unterschiedlichen Zellen übermittelt.

3. Verfahren nach Anspruch 1 oder 2, wobei das Verfahren in der Nutzerentität Folgendes umfasst:
Speichern einer Darstellung erfasster lokaler Identitäten und entsprechender globaler Identitäten.

4. Verfahren nach Anspruch 3, wobei das Verfahren in der Nutzerentität Folgendes umfasst:
Erfassen einer neuen Zelle, die derselben lokalen Identität wie eine in der Darstellung bereits vorhandene Zelle entspricht.

5. Verfahren nach Anspruch 1, wobei das Kriterium an die Nutzerentität signalisiert wird.

6. Verfahren nach Anspruch 1 oder 5, wobei das Kriterium eines oder mehrere aus der folgenden Gruppe von Kriterien ist:
- während die Nutzerentität durch denselben Funksender bedient wird, werden zwei oder mehr Zellen erfasst, die derselben lokalen Identität entsprechen,
- zwischen den Erfassungen von Zellen, die derselben lokalen Identität entsprechen, ist die Nutzerentität in einer vorgegebenen Maximalzahl von Zellen vorhanden gewesen,
- die Zeit zwischen zwei der Erfassungen ist kleiner als ein bestimmter Wert,
- die Nutzerentität hat sich weniger als eine vorgegebene Entfernung bewegt,
- die zwei unterschiedlichen Zellen werden gleichzeitig oder im Wesentlichen gleichzeitig erfasst, und/oder
- die Entfernung zwischen den unterschiedlichen Zellen ist kleiner als ein Schwellenwert.

7. Verfahren nach einem der Ansprüche 1 bis 6, wobei das Verfahren Folgendes umfasst: Berichten der Erfassung an die Netzentität sofort, wenn eine Sollzeitdauer nach der Erfassung verstrichen ist, und/oder zusammen mit dem Signalisieren anderer Daten.

8. Zellenkommunikationssystem zum Erfassen einer Zellenidentitätskollision, wobei ein Versorgungsbereich des Kommunikationssystems aus mehreren Zellen (104-106) besteht, wobei in jeder der Zellen wenigstens ein Funksender (101-103) eine Kommunikation mit wenigstens einer Nutzerentität (107) bereitstellt, wobei jede der Zellen einer lokalen Identität, die innerhalb des Kommunikationssystems wiederverwendbar ist, und einer entsprechenden globalen Identität, die in dem System eindeutig ist, entspricht, wobei Zellen, die einer selben lokalen Identität entsprechen, durch unterschiedliche globale Identitäten unterscheidbar angeordnet sind, **dadurch gekennzeichnet, dass** das Kommunikationssystem Mittel für Folgendes umfasst, wenn durch die Nutzerentität zwei unterschiedliche Zellen erfasst werden, die dieselbe lokale Identität verwenden:
- Empfangen der Erfassung der zwei unterschiedlichen Zellen, die dieselbe lokale Identität verwenden, von der Nutzerentität, wobei die Erfassung von der Nutzerentität gesendet wird, wenn ein Kriterium erfüllt ist; wobei die Erfassung durch Lesen der globalen Identität einer neu erfassten Zelle mit derselben lokalen Identität wie eine bekannte Zelle und durch Bestimmen, dass die globalen Identitäten der bekannten Zelle und der neu erfassten Zelle unterschiedlich sind, ausgeführt wird.

9. Zellenkommunikationssystem nach Anspruch 8, wobei das System Mittel zum Signalisieren des Kriteriums an die Nutzerentität umfasst.

10. Nutzerentität zum Erfassen einer Zellenidentitätskollision in einem Zellenkommunikationssystem, wobei ein Versorgungsbereich des Kommunikationssystems aus mehreren Zellen (104-106) besteht, wobei in jeder der Zellen wenigstens ein Funksender (101-103) eine Kommunikation mit wenigstens einer Nutzerentität (107) bereitstellt, wobei jede der Zellen einer lokalen Identität, die innerhalb des Kommunikationssystems wiederverwendbar ist, und einer entsprechenden globalen Identität, die in dem System eindeutig ist, entspricht, wobei Zellen, die einer selben lokalen Identität entsprechen, durch unterschiedliche globale Identitäten unterscheidbar angeordnet sind, **dadurch gekennzeichnet, dass** die Nutzerentität Mittel für Folgendes umfasst:
- Erfassen, dass zwei unterschiedliche Zellen dieselbe lokale Identität verwenden, und
- Übermitteln der Erfassung zweier unterschiedlicher Zellen, die dieselbe lokale Identität verwenden, an eine Netzentität, wobei die Erfassung gesendet wird, wenn ein Kriterium erfüllt ist; wobei die Erfassung durch Lesen der globalen Identität einer neu erfassten Zelle mit derselben lokalen Identität wie eine bekannte Zelle und durch Bestimmen, dass die globalen Identitäten der bekannten Zelle und der neu erfassten Zelle unterschiedlich sind, ausgeführt wird.

11. Nutzerentität nach Anspruch 10, wobei die Nutzerentität Mittel umfasst, um die lokale und/oder die globale Identität wenigstens einer der zwei unterschiedlichen Zellen zu übermitteln.

12. Nutzerentität nach Anspruch 10 oder 11, wobei die Nutzerentität Mittel für Folgendes umfasst:
- Speichern einer Darstellung erfasster lokaler Identitäten und entsprechender globaler Identitäten.

13. Netzentität zum Erfassen einer Zellenidentitätskollision in einem Zellenkommunikationssystem, wobei ein Versorgungsbereich des Kommunikationssystems aus mehreren Zellen (104-106) besteht, wobei in jeder der Zellen wenigstens ein Funksender (101-103) eine Kommunikation mit wenigstens einer Nutzerentität (107) bereitstellt, wobei jede der Zellen einer lokalen Identität, die innerhalb des Kommunikationssystems wiederverwendbar ist, und einer entsprechenden globalen Identität, die in dem System eindeutig ist, entspricht, wobei Zellen, die einer selben lokalen Identität entsprechen, durch unterschiedliche globale Identitäten unterscheidbar sind, **dadurch gekennzeichnet, dass** die Netzentität Mittel für Folgendes umfasst, wenn durch die Nutzerentität zwei unterschiedliche Zellen erfasst werden, die dieselbe lokale Identität verwenden:
Empfangen der Erfassung der zwei unterschiedlichen Zellen, die dieselbe lokale Identität verwenden, von der Nutzerentität, wobei die Erfassung gesendet wird, wenn ein Kriterium erfüllt ist; wobei die Erfassung durch Lesen der globalen Identität einer neu erfassten Zelle mit derselben lokalen Identität wie eine bekannte Zelle und durch Bestimmen, dass die globalen Identitäten der bekannten Zelle und der neu erfassten Zelle unterschiedlich sind, ausgeführt wird.

## Revendications

1. Procédé de détection de collision d'identités cellulaires dans un système de communications cellulaires, dans lequel une zone de couverture dudit système de communications est composée d'une pluralité de cellules (104-106), dans chacune desquelles au moins un émetteur radio (101-103) assure des communications avec au moins une entité d'utilisateur (107), chacune desdites cellules correspondant à une identité locale, laquelle est réutilisable dans le système de communications, et à une identité globale correspondante, laquelle est unique dans le système, où les cellules correspondant à une même identité locale sont différenciables par différentes identités globales, **caractérisé en ce que** le procédé comprend, quand deux cellules différentes utilisant la même identité locale sont détectées par l'entité d'utilisateur (étape 201) :
la communication de la détection des deux cellules différentes utilisant la même identité locale à une entité de réseau (étape 203), la détection étant transmise quand un critère est rempli (étape 202) ; la détection étant effectuée en lisant l'identité globale d'une cellule nouvellement détectée ayant la même identité locale qu'une cellule connue et en déterminant que les identités globales de la cellule connue et de la cellule nouvellement détectée sont différentes.

2. Procédé selon la revendication 1, comprenant la communication supplémentaire par l'entité d'utilisateur de l'identité locale et/ou globale d'au moins l'une des deux cellules différentes.

3. Procédé selon la revendication 1 ou 2, comprenant dans ladite entité d'utilisateur :
la mémorisation d'une représentation d'identités locales détectées et d'identités globales correspondantes.

4. Procédé selon la revendication 3, comprenant dans ladite entité d'utilisateur :
la détection d'une nouvelle cellule correspondant à la même identité locale qu'une cellule déjà présente dans la représentation.

5. Procédé selon la revendication 1, dans lequel ledit critère est signalé à l'entité d'utilisateur.

6. Procédé selon la revendication 1 ou 5, dans lequel ledit critère est l'un ou plusieurs du groupe de critères suivants :
- deux cellules ou plus correspondant à la même identité locale sont détectées pendant que l'entité d'utilisateur est desservie par le même émetteur radio,
- l'entité d'utilisateur a été présente dans un nombre maximum prédéterminé de cellules entre les détections de cellules correspondant à la même identité locale,
- le temps entre deux des détections est inférieur à une certaine valeur,
- l'entité d'utilisateur s'est déplacée de moins qu'une distance prédéterminée,
- les deux cellules différentes sont détectées simultanément ou sensiblement simultanément, et/ou
- la distance entre les cellules différentes est inférieure à une valeur de seuil.

7. Procédé selon l'une des revendications 1 à 6, le procédé comprenant : la communication immédiate de ladite détection à l'entité de réseau, quand une période de temps établie après la détection s'est écoulée, et/ou avec la signalisation d'autres données.

8. Système de communications cellulaires de détection de collision d'identités cellulaires, dans lequel une zone de couverture dudit système de communications est composée d'une pluralité de cellules (104-106), dans chacune desquelles au moins un émetteur radio (101-103) assure des communications avec au moins une entité d'utilisateur (107), chacune desdites cellules correspondant à une identité locale, laquelle est réutilisable dans le système de communications, et à une identité globale correspondante, laquelle est unique dans le système, les cellules correspondant à une même identité locale étant agencées pour être différenciables par différentes identités globales, **caractérisé en ce que** le système de communications comprend un moyen pour, quand deux cellules différentes utilisant la même identité locale sont détectées par l'entité d'utilisateur :
- recevoir la détection des deux cellules différentes utilisant la même identité locale depuis l'entité d'utilisateur, la détection étant transmise par l'entité d'utilisateur quand un critère est rempli ; la détection étant effectuée en lisant l'identité globale d'une cellule nouvellement détectée ayant la même identité locale qu'une cellule connue et en déterminant que les identités globales de la cellule connue et de la cellule nouvellement détectée sont différentes.

9. Système de communications cellulaires selon la revendication 8, le système comprenant un moyen de signalisation du critère à ladite entité d'utilisateur.

10. Entité d'utilisateur de détection de collision d'identités cellulaires dans un système de communications cellulaires, dans laquelle une zone de couverture dudit système de communications est composée d'une pluralité de cellules (104-106), dans chacune desquelles au moins un émetteur radio (101-103) assure des communications avec au moins une entité d'utilisateur (107), chacune desdites cellules correspondant à une identité locale, laquelle est réutilisable dans le système de communications, et à une identité globale correspondante, laquelle est unique dans le système, les cellules correspondant à une même identité locale étant agencées pour être différenciables par différentes identités globales, **caractérisée en ce que** l'entité d'utilisateur comprend un moyen pour :
- détecter que deux cellules différentes utilisent la même identité locale, et
- communiquer la détection de deux cellules différentes utilisant la même identité locale à une entité de réseau, la détection étant transmise quand un critère est rempli ; la détection étant effectuée en lisant l'identité globale d'une cellule nouvellement détectée ayant la même identité locale qu'une cellule connue et en déterminant que les identités globales de la cellule connue et de la cellule nouvellement détectée sont différentes.

11. Entité d'utilisateur selon la revendication 10, dans laquelle l'entité d'utilisateur comprend un moyen pour communiquer l'identité locale et/ou globale d'au moins l'une des deux cellules différentes.

12. Entité d'utilisateur selon la revendication 10 ou 11, l'entité d'utilisateur comprenant un moyen pour :
- mémoriser une représentation d'identités locales détectées et d'identités globales correspondantes.

13. Entité de réseau de détection de collision d'identités cellulaires dans un système de communications cellulaires, dans laquelle une zone de couverture dudit système de communications est composée d'une pluralité de cellules (104-106), dans chacune desquelles au moins un émetteur radio (101-103) assure des communications avec au moins une entité d'utilisateur (107), chacune desdites cellules correspondant à une identité locale, laquelle est réutilisable dans le système de communications, et à une identité globale correspondante, laquelle est unique dans le système, les cellules correspondant à une même identité locale étant différenciables par différentes identités globales, **caractérisée en ce que** l'entité de réseau comprend un moyen pour, quand deux cellules différentes utilisant la même identité locale sont détectées par l'entité d'utilisateur :
- recevoir la détection des deux cellules différentes utilisant la même identité locale depuis l'entité d'utilisateur, la détection étant transmise quand un critère est rempli ; la détection étant effectuée en lisant l'identité globale d'une cellule nouvellement détectée ayant la même identité locale qu'une cellule connue et en déterminant que les identités globales de la cellule connue et de la cellule nouvellement détectée sont différentes.
